# EUROPEAN PATENT APPLICATION

(11) **EP 4 535 615 A1**
(43) Date of publication of application: **09.04.2025**
(21) Application number: 23811461.5
(22) Date of filing: 03.04.2023
(51) Int. Cl.: H02K 1/18, H02K 1/16, H02K 21/12

(54) **ELECTRIC MOTOR, CORE BLOCK, AND STATOR CORE**

(30) Priority: 27.05.2022 JP 2022087077
(71) Applicant: Panasonic Intellectual Property Management Co., Ltd., Kadoma-shi, Osaka 571-0057 (JP)
(72) Inventor: YAMAGUCHI, Akira, Kadoma-shi, Osaka 571-0057 (JP)
(74) Representative: SSM Sandmair
(86) International application number: PCT/JP2023/013765
(87) International publication number: WO 2023/228582

(57) **Abstract**

An electric motor includes a stator core in which a plurality of core blocks are coupled in an annular shape. Each of a first core block and a second core block coupled to each other among the plurality of core blocks includes a yoke portion and a tooth portion. A protrusion, a first surface, and a second surface are provided in a yoke portion of the first core block, a recess fitted to the protrusion, a third surface, and a fourth surface are provided in the yoke portion of the second core block. The first core block and the second core block are coupled by bringing the first surface and the third surface into surface contact with each other, or by bringing the second surface and the fourth surface into surface contact with each other.

## Description

### TECHNICAL FIELD

The present disclosure relates to an electric motor, a core block used for a stator core included in an electric motor, and a stator core including a core block.

### BACKGROUND ART

Electric motors have been used in various electric devices such as household devices or industrial devices. A commutator motor using a brush and a brushless motor not using a brush has been known as the electric motor.

The brushless motor includes, for example, a rotor having a magnet and a stator having a stator core and a winding wound around the stator core. In related art, a technology of dividing the stator core into a plurality of core blocks (divided cores) has been proposed (see, for example, PTL 1).

In a case where the stator core is constituted by the plurality of core blocks, in the related art, the stator core is formed by dividing the stator core by the number corresponding to the number of slots and combining core blocks of the same number as the number of divided stator core in an annular shape.

However, in this method, a shape of the core block is uniquely determined by the number of slots of the stator. That is, the core block is dedicated to correspond to the number of slots of the stator. Therefore, in order to produce a stator core having another number of slots, a new core block needs to be separately designed. In this case, a mold for producing the new core block is required, an insulator corresponding to the new core block is required, or changing of a jig of a winding machine is required to perform winding corresponding to the new core block. As a result, cost increases.

As described above, in the core block of the related art, there is a problem that only a stator having the number of slots of one pattern can correspond.

### Citation List

### Patent Literature

PTL 1: Unexamined Japanese Patent Publication No. 2010-259174

### SUMMARY OF THE INVENTION

The present disclosure has been made to solve such a problem. An object of the present disclosure is to provide an electric motor, a core block, and a stator core that can correspond to stators having the number of slots of two patterns by one core block.

In order to achieve the above object, an aspect of an electric motor according to the present disclosure includes a stator including a stator core in which a plurality of core blocks are coupled in an annular shape, and a rotor including a rotating shaft and disposed inside the stator. The plurality of core blocks include a first core block and a second core block coupled to each other, each of the first core block and the second core block includes a yoke portion extending along a circumferential direction with an axis of the rotating shaft as a center, and a tooth portion extending from the yoke portion toward the rotating shaft, a protrusion, a first surface positioned on an outer peripheral side of the protrusion, and a second surface positioned on an inner peripheral side of the protrusion are provided in a coupling portion of the yoke portion of the first core block to the yoke portion of the second core block, a recess fitted to the protrusion, a third surface positioned on an outer peripheral side of the recess, and a fourth surface positioned on an inner peripheral side of the recess are provided in a coupling portion of the yoke portion of the second core block to the yoke portion of the first core block, and the first core block and the second core block are coupled by bringing the first surface and the third surface into surface contact with each other, or by bringing the second surface and the fourth surface into surface contact with each other.

It is preferable that the first core block and the second core block are alternately coupled to each other over an entire circumference of the stator core, and a total number of slots of the stator is different between a case where the first surface and the third surface come into contact with each other and a case where the second surface and the fourth surface come into contact with each other.

The total number of slots in a case where the first surface and the third surface are brought into surface contact with each other may be nine, and the total number of slots in a case where the second surface and the fourth surface are brought into surface contact with each other may be six.

The total number of slots in a case where the first surface and the third surface are brought into surface contact with each other may be 12, and the total number of slots in a case where the second surface and the fourth surface are brought into surface contact with each other may be nine.

In top view, a contour of the yoke portion in the first core block includes a first arc and a second arc having different radii of curvature. In top view, a contour of the yoke portion in the second core block includes a third arc and a fourth arc having different radii of curvature.

In the yoke portion of the first core block, the second arc may be positioned on a distal end side of the yoke portion with respect to the first arc, in the yoke portion of the second core block, the fourth arc may be positioned on a distal end side of the yoke portion with respect to the third arc, and when the first surface and the third surface are brought into surface contact with each other, the first arc and the third arc may become arcs of a same circle.

In the yoke portion of the first core block, the second arc may be positioned on a distal end side of the yoke portion with respect to the first arc, in the yoke portion of the second core block, the fourth arc may be positioned on a distal end side of the yoke portion with respect to the third arc, and when the second surface and the fourth surface are brought into surface contact with each other, the second arc and the fourth arc may become arcs of a same circle.

In the yoke portion of the first core block, the second arc is positioned on a distal end side of the yoke portion with respect to the first arc, in the yoke portion of the second core block, the fourth arc is positioned on a distal end side of the yoke portion with respect to the third arc, and when the first surface and the third surface are brought into surface contact with each other, the first arc and the third arc become arcs of a same circle. Alternatively, when the second surface and the fourth surface are brought into surface contact with each other, the second arc and the fourth arc may become arcs of a same circle.

A diameter of the circle may be less than or equal to 50 mm.

In top view, an intersection of a first straight line when the first surface extends and a second straight line when the second surface extends may be positioned within the protrusion.

The electric motor may be a brushless motor.

Another aspect of a core block according to the present disclosure is a core block included in a stator core, the stator core including a plurality of stator blocks being coupled in an annular shape, the plurality of stator cores each being the core blocks. The core block includes a yoke portion extending along a circumferential direction of the stator core, and a tooth portion extending from the yoke portion toward a central portion of the stator core, a protrusion, a first surface positioned on an outer peripheral side of the protrusion, and a second surface positioned on an inner peripheral side of the protrusion are provided at one end of the yoke portion in a circumferential direction, and a recess configured to be fitted to the protrusion, a third surface positioned on an outer peripheral side of the recess, the third surface being a surface configured to be brought into surface contact with the first surface, and a fourth surface positioned on an inner peripheral side of the recess, the fourth surface being a surface configured to be brought into surface contact with the second surface are provided at an other end of the yoke portion in the circumferential direction.

Still another aspect of the stator core according to the present disclosure includes a plurality of the core blocks, and the plurality of core blocks are coupled in an annular shape.

Still another aspect of an electric motor according to the present disclosure includes a stator including the stator core and a winding wound around the stator core, and a rotor positioned to face the stator.

According to the present disclosure, the stator having the number of slots of two patterns can be realized by one core block.

### BRIEF DESCRIPTION OF THE DRAWINGS

Fig. 1 is a sectional view of an electric motor according to an exemplary embodiment taken along a plane passing through a rotating shaft.
Fig. 2 is a sectional view of the electric motor according to the exemplary embodiment taken along a plane orthogonal to the rotating shaft.
Fig. 3 is an exploded perspective view of the electric motor according to the exemplary embodiment as viewed obliquely from above.
Fig. 4 is a plan view of a stator core according to the exemplary embodiment when a plurality of core blocks are coupled in a first coupling pattern.
Fig. 5 is a plan view of a core block constituting the stator core according to the exemplary embodiment.
Fig. 6 is a plan view of the stator core according to the exemplary embodiment when the plurality of core blocks are coupled in a second coupling pattern.

### DESCRIPTION OF EMBODIMENT

Hereinafter, exemplary embodiments of the present disclosure will be described with reference to the drawings. Exemplary embodiments to be described below illustrate specific examples of the present disclosure. Therefore, numerical values, constituent elements, arrangement positions and connection modes of the constituent elements, steps, order of the steps, and the like illustrated in the following exemplary embodiment are merely examples, and are not intended to limit the present disclosure. Thus, among the constituent elements in the following exemplary embodiments, constituent elements that are not described in independent claims indicating the highest concept of the present disclosure are described as optional constituent elements.

Each of the drawings is a schematic view and is not necessarily exactly illustrated. In each drawing, substantially the same components as those in other drawings are denoted by the same reference numerals, and redundant description will be omitted or simplified. In the present specification, the terms "upper" and "lower" do not necessarily refer to an upward direction (vertically upward) and a downward direction (vertically downward) in terms of absolute space recognition.

### (Exemplary embodiment)

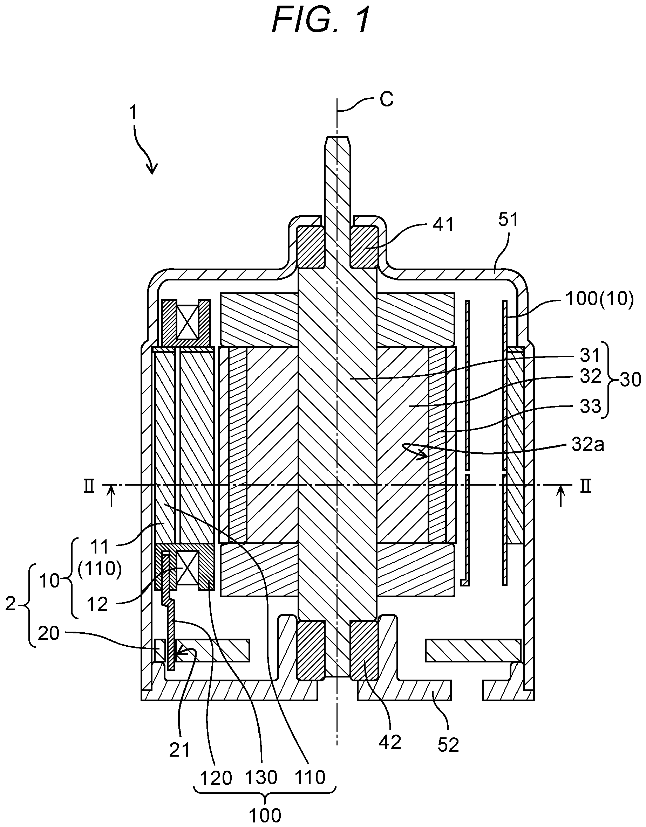

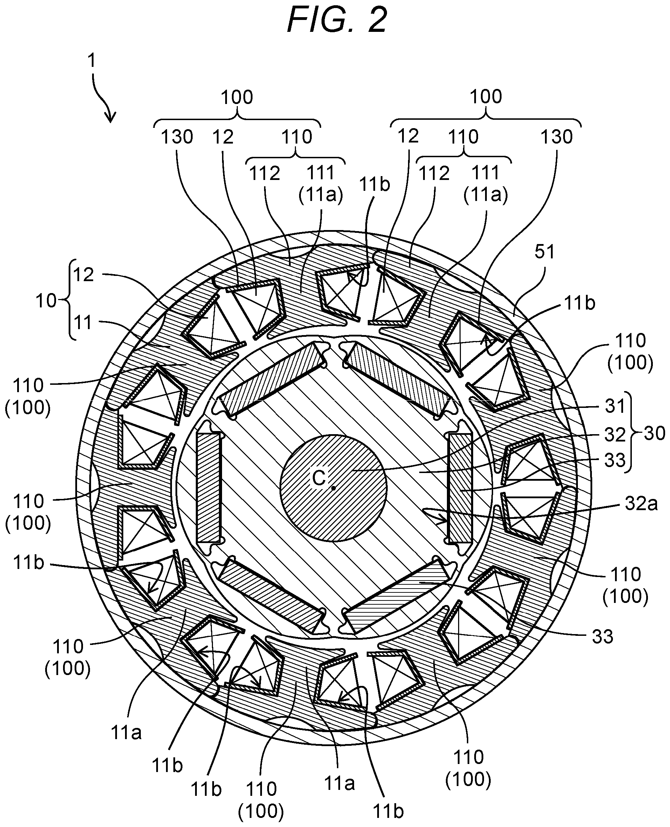

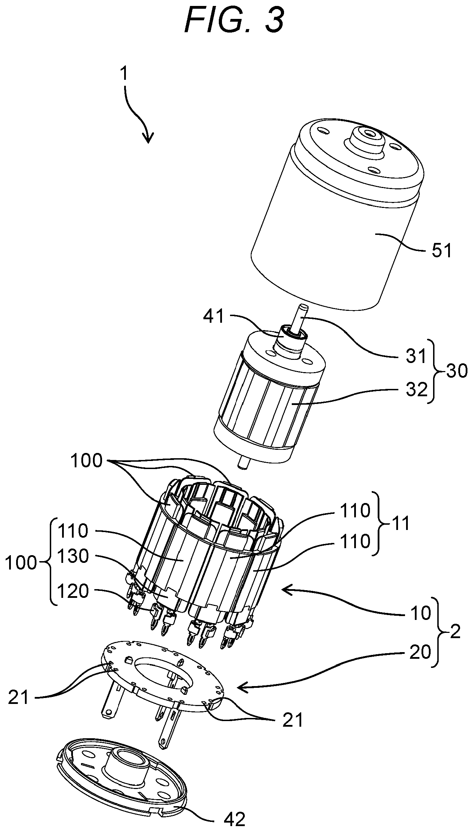

First, a configuration of electric motor 1 according to the exemplary embodiment will be described with reference to Figs. 1 to 3. Fig. 1 is a sectional view of electric motor 1 according to the exemplary embodiment taken along a plane passing through rotating shaft 31. Fig. 2 is a sectional view of electric motor 1 according to the exemplary embodiment taken along a plane orthogonal to rotating shaft 31. Fig. 2 illustrates a section taken along line II-II in Fig. 1. Fig. 3 is an exploded perspective view of electric motor 1 according to the exemplary embodiment as viewed obliquely from above.

As illustrated in Figs. 1 to 3, electric motor 1 includes stator 10, circuit board 20, and rotor 30 having rotating shaft 31. Stator 10 and circuit board 20 are combined as stator assembly 2.

As illustrated in Fig. 1, electric motor 1 further includes first bearing 41, second bearing 42, first bracket 51, and second bracket 52.

Electric motor 1 is a brushless motor. Electric motor 1 can be used as, for example, an air blower motor or a drive motor that is small and requires high power. A size of electric motor 1 is, for example, less than or equal to 50 mm in diameter. Specifically, the size of electric motor 1 is, for example, 20 mm in diameter or 30 mm in diameter.

As illustrated in Figs. 1 and 2, electric motor 1 is an inner rotor type motor in which rotor 30 is disposed inside stator 10. That is, stator 10 is disposed to surround rotor 30. Therefore, rotor 30 rotates about axis C of rotating shaft 31 as a rotation center inside stator 10.

Stator 10 is disposed to face rotor 30 with an air gap between stator 10 and rotor 30. Specifically, stator 10 is disposed to surround rotor core 32 of rotor 30.

Stator 10 generates a magnetic force acting on rotor 30. Specifically, stator 10 has a configuration in which a plurality of N poles and S poles are alternately and repeatedly present along a rotation direction to generate a magnetic flux on an air gap surface with rotor core 32 of rotor 30. Stator 10 constitutes a magnetic circuit together with rotor 30.

Stator 10 constitutes an armature. Stator 10 includes stator core 11 (stator iron core) and winding 12 disposed on stator core 11. Winding 12 is a winding coil wound around stator core 11.

As illustrated in Fig. 2, stator core 11 has a plurality of teeth 11a protruding toward rotor 30. Specifically, the plurality of teeth 11a radially extend in a direction (radial direction) orthogonal to axis C of rotating shaft 31. The plurality of teeth 11a are disposed at equal intervals in a circumferential direction while forming slot 11b between two adjacent teeth 11a. Stator core 11 has nine teeth 11a. That is, the number of slots of stator 10 is nine.

Winding 12 is disposed in slot 11b of stator core 11. Winding 12 is a stator coil which is an armature winding of stator 10. As an example, winding 12 is a concentrated wound coil wound around each tooth 11a.

Winding 12 has a three-phase winding to be able to rotate rotor 30 as a three-phase synchronous motor. Specifically, winding 12 is formed of unit coils of three phases of U-phase, V-phase, and W-phase that are electrically different from each other by 120 degrees. That is, winding 12 wound around each tooth 11a is energized and driven by three-phase alternating current energized in units of phases of the U-phase, the V-phase, and the W-phase. As a result, a main magnetic flux of stator 10 is generated in each tooth 11a. That is, each tooth 11a is a magnetic pole tooth. A current flows through winding 12, and thus, each tooth 11a is an electromagnet that generates a magnetic force.

Stator core 11 is divided into a plurality of core blocks 110 (divided cores). That is, stator core 11 of stator 10 includes the plurality of core blocks 110.

The plurality of core blocks 110 are arrayed in an annular shape as a whole. Specifically, nine core blocks 110 are disposed to form the annular shape. Two adjacent core blocks 110 are coupled to each other. That is, stator core 11 is formed by coupling the plurality of core blocks in the annular shape. Winding 12 is wound around each of the plurality of core blocks 110. Since stator 10 has nine core blocks 110, nine windings 12 are used.

As illustrated in Fig. 2, one core block 110 and one winding 12 constitute intermediate assembly 100. Intermediate assembly 100 is an intermediate component used in manufacturing stator assembly 2. Stator 10 is formed by combining a plurality of intermediate assemblies 100. Specifically, stator 10 is formed by disposing the plurality of intermediate assemblies 100 in a cylindrical shape. The plurality of intermediate assemblies 100 are combined by coupling core blocks 110 in the annular shape. Stator 10 includes nine intermediate assemblies 100.

As illustrated in Figs. 2 and 3, core block 110 is provided for each intermediate assembly 100. Winding 12 in stator 10 is also provided for each intermediate assembly 100. Connection terminal 120 and insulator 130 are also provided for each intermediate assembly 100. Therefore, each of the plurality of intermediate assemblies 100 includes core block 110, winding 12, connection terminal 120, and insulator 130. Winding 12 is wound around core block 110 via insulator 130. Connection terminal 120 is fixed to insulator 130. A detailed configuration of core block 110 will be described later.

As illustrated in Figs. 1 and 3, circuit board 20 is a printed wiring board (PCB) in which wiring made of a conductive material such as copper is formed in a predetermined pattern. As a base material of circuit board 20, a resin base material such as a glass epoxy substrate or a metal base material such as an aluminum alloy substrate can be used. A plurality of electronic components (not illustrated) for generating a current to be supplied to windings 12 of stator 10 are implemented on circuit board 20. The plurality of electronic components constitute a circuit that generates three-phase alternating currents of a U phase, a V phase, and a W phase.

Through-holes 21 are provided in circuit board 20. As illustrated in Fig. 1, connection terminal 120 of intermediate assembly 100 corresponding to core block 110 is connected to through-hole 21. Connection terminal 120 is a connection terminal to which winding 12 of stator 10 is connected. Connection terminal 120 includes a connection pin, and the connection pin of connection terminal 120 to which winding 12 is connected is inserted into through-hole 21. As a result, connection terminal 120 and circuit board 20 are connected. As described above, circuit board 20 is a connection board to which winding 12 is connected via connection terminal 120. A plurality of through-holes 21 are provided in circuit board 20.

The connection pin of connection terminal 120 is press-fitted into through-hole 21 of circuit board 20. As a result, connection terminal 120 can be fixed to circuit board 20. An inner peripheral surface of each through-hole 21 is covered with a conductive film (for example, copper plating) electrically connected to wiring formed on a principal surface of circuit board 20. Therefore, the connection pin of connection terminal 120 is press-fitted into through-hole 21, and thus, connection terminal 120 is mechanically connected to circuit board 20. In addition, the connection pin of the connection terminal is electrically connected to the wiring of circuit board 20 via the conductive film coated on the inner peripheral surface of through-hole 21.

Rotor 30 rotates by a magnetic force generated in stator 10. Rotor 30 has a configuration in which a plurality of N poles and S poles are alternately and repeatedly present along the rotation direction. As a result, rotor 30 to generate a magnetic force acting on stator 10. An orientation of a magnetic flux generated by rotor 30 is a direction orthogonal to a direction (axial direction) in which axis C included in rotating shaft 31 extends. That is, the orientation of the magnetic flux generated by rotor 30 is the radial direction (diameter direction).

As illustrated in Figs. 1 and 2, rotor 30 includes rotating shaft 31, rotor core 32, and permanent magnet 33. Rotor 30 is a permanent magnet embedded-type rotor (interior permanent magnet (IPM) rotor) in which permanent magnet 33 is embedded in rotor core 32. Therefore, electric motor 1 is an IPM motor.

Rotating shaft 31 is an elongated shaft. Rotating shaft 31 is a metal rod, for example. Rotating shaft 31 is fixed to rotor core 32. Specifically, rotating shaft 31 is inserted into a through-hole provided at the center of rotor core 32 and is fixed to rotor core 32 such that rotating shaft 31 extends on both sides of rotor core 32 in the direction in which axis C extends.

Rotor core 32 is a stacked body in which multiple steel sheets are stacked in the direction (axial direction) in which axis C of rotating shaft 31 extends. Each of the multiple steel sheets is a punched electromagnetic steel sheet formed in a predetermined shape, for example. The multiple steel sheets are fixed to each other by, for example, crimping.

Permanent magnets 33 are inserted into magnet insertion hole 32a provided in rotor core 32. Six magnet insertion holes 32a are provided in rotor core 32 at equal intervals in the circumferential direction. Therefore, rotor 30 has six permanent magnets 33 disposed at equal intervals in the circumferential direction. That is, the number of poles of electric motor 1 is six. Permanent magnet 33 is a sintered magnet. However, permanent magnet 33 may be a bonded magnet.

First bearing 41 and second bearing 42 that rotatably hold rotating shaft 31 are provided in rotating shaft 31 of rotor 30. First bearing 41 and second bearing 42 are bearings that rotatably hold rotating shaft 31. First bearing 41 supports a portion of rotating shaft 31 protruding from one side of rotor core 32. On the other hand, second bearing 42 supports a portion of rotating shaft 31 protruding from the other side of rotor core 32. First bearing 41 and second bearing 42 are ball bearings, for example. However, the present disclosure is not limited thereto.

First bracket 51 holds first bearing 41. Specifically, first bearing 41 is fixed to a recess provided in first bracket 51. Second bracket 52 holds second bearing 42. Specifically, second bearing 42 is fixed to a recess provided in second bracket 52. First bracket 51 and second bracket 52 are each made of, for example, a metallic material or a resin material.

First bracket 51 and second bracket 52 constitute an outline of electric motor 1. Specifically, first bracket 51 is a frame (housing) having a bottomed cylindrical shape with an opening portion. Second bracket 52 is a bottom plate that closes the opening portion of first bracket 51. First bracket 51 is a metal frame made of metal. Second bracket 52 is a resin plate made of resin.

Rotating shaft 31 of rotor 30 penetrates first bracket 51. A part of rotating shaft 31 protrudes outward from first bracket 51. Although not illustrated, a load such as a rotary fan is attached to a part of rotating shaft 31 protruding outward from first bracket 51. That is, the part of rotating shaft 31 protruding from first bracket 51 is an output shaft.

In electric motor 1 having the above configuration, when winding 12 of stator 10 is energized, a field current flows through winding 12, and a magnetic flux is generated in stator 10 (stator core 11). As a result, a magnetic flux directed from stator 10 toward rotor 30 is generated. Specifically, the magnetic flux directed from each of teeth 11a of stator core 11 of stator 10 toward rotor core 32 of rotor 30 is generated. On the other hand, in rotor 30, a magnetic flux passing through stator 10 is generated by permanent magnet 33 embedded in rotor core 32. The magnetic flux generated in stator 10 and the magnetic flux generated from permanent magnet 33 of rotor 30 interact with each other to generate a magnetic force that becomes a torque to rotate rotor 30. As a result, rotor 30 rotates.

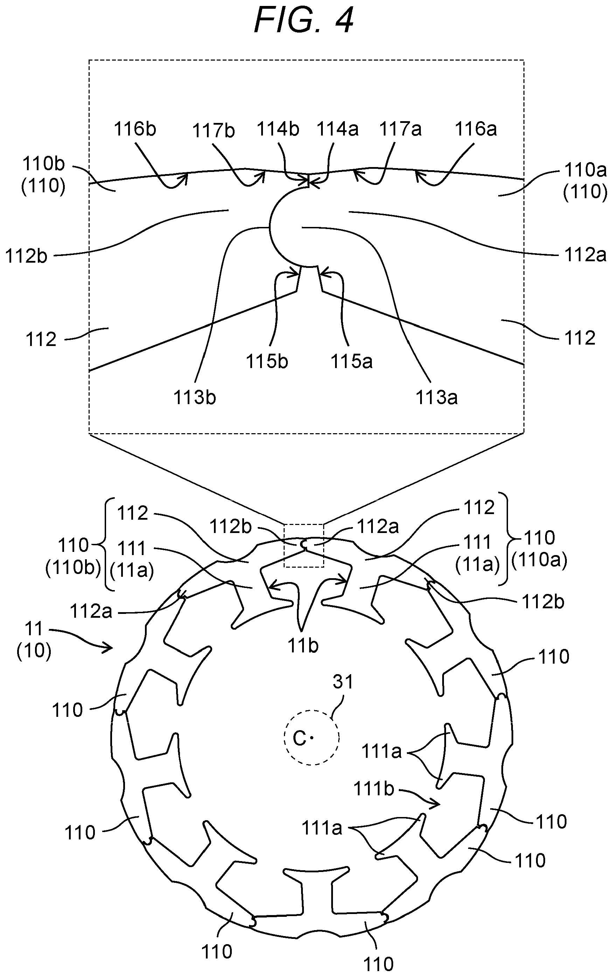

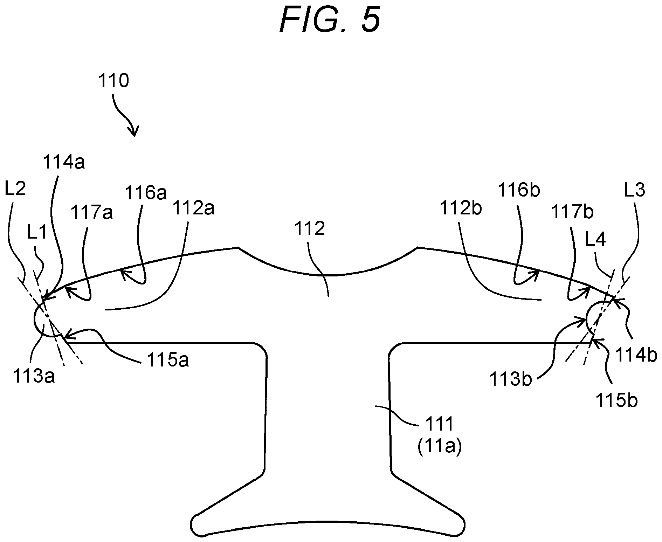

Next, a detailed shape of core block 110 constituting stator core 11 and a coupling pattern of core block 110 will be described with reference to Figs. 1 to 3 and Figs. 4 and 5. Fig. 4 is a plan view of stator core 11 according to the exemplary embodiment when the plurality of core blocks 110 are coupled in a first coupling pattern. Fig. 5 is a plan view of core block 110 constituting stator core 11 according to the exemplary embodiment.

Each of the plurality of core blocks 110 is formed by stacking multiple steel plates. Specifically, each core block 110 is a stacked body in which a plurality of punched electromagnetic steel sheets are stacked along the direction in which axis C of rotating shaft 31 extends. The electromagnetic steel sheets constituting core block 110 have the same shape. The plurality of electromagnetic steel sheets are fixed to each other by, for example, crimping.

As illustrated in Figs. 2 and 4, each core block 110 includes tooth portion 111 and yoke portion 112. Tooth portion 111 is tooth 11a of stator core 11 illustrated in Fig. 2.

As illustrated in Fig. 4, tooth portion 111 is formed inside yoke portion 112. Tooth portion 111 extend from yoke portion 112 toward a central portion of stator core 11. Specifically, tooth portion 111 extends from yoke portion 112 toward rotating shaft 31. That is, tooth portion 111 extends to protrude inward of stator 10 in a radial direction.

Tooth portion 111 includes extending portion 111a extending from a distal end on an inner peripheral side of tooth portion 111 to both sides in a circumferential direction. Each of the pair of extending portions 111a is formed to protrude along the circumferential direction from the distal end on the inner peripheral side of tooth portion 111. In two adjacent core blocks 110, a gap (slot opening) 111b is present between extending portion 111a of tooth portion 111 in one core block 110 and extending portion 111a of tooth portion 111 in other core block 110.

Slot 11b for disposing winding 12 is formed between two adjacent tooth portions 111. That is, slot 11b is a space region on a side of tooth portion 111.

As illustrated in Fig. 2, winding 12 is wound around tooth portion 111. Specifically, winding 12 is wound around tooth portion 111 via insulator 130.

As illustrated in Fig. 4, in core block 110, yoke portion 112 is a back yoke formed outside tooth portion 111. Yoke portion 112 extends along a circumferential direction of stator core 11. Yoke portion 112 extends along a circumferential direction (a rotation direction of rotating shaft 31) with axis C of rotating shaft 31 as a center. In two adjacent core blocks 110, end surfaces of two adjacent yoke portions 112 in the circumferential direction abut on each other and coupled. Specifically, in Fig. 4, nine yoke portions 112 are disposed along a circumferential direction of a circle with axis C of rotating shaft 31 as a center and are coupled to form an annular shape as a whole.

As illustrated in Fig. 5, in each core block 110, protrusion 113a and first surface 114a and second surface 115a positioned on both sides of protrusion 113a are provided in first end 112a that is one end of yoke portion 112 in a circumferential direction. Protrusion 113a, first surface 114a, and second surface 115a are formed on end surfaces of first end 112a facing in the circumferential direction. In top view, protrusion 113a is sandwiched between first surface 114a and second surface 115a.

Protrusion 113a is formed to protrude from first end 112a toward the circumferential direction of stator core 11. A shape of protrusion 113a in top view is semicircular. Therefore, when core block 110 is viewed stereoscopically, protrusion 113a has a semi-columnar shape. The shape of protrusion 113a in top view is not limited to the semicircular shape.

First surface 114a is positioned on an outer peripheral side of protrusion 113a. Specifically, first surface 114a is a plane parallel to a plane passing through axis C of rotating shaft 31. First surface 114a extends from a base on the outer peripheral side of protrusion 113a toward the outer peripheral side. First surface 114a is a flat surface.

Second surface 115a is positioned on an inner peripheral side of protrusion 113a. Specifically, second surface 115a is a plane parallel to a plane passing through axis C of rotating shaft 31. Second surface 115a extends from a base on the inner peripheral side of protrusion 113a toward the inner peripheral side. Second surface 115a is a flat surface.

Both first surface 114a and second surface 115a are surfaces facing the circumferential direction of rotating shaft 31. In first surface 114a and second surface 115a, an inclination angle of first surface 114a with respect to a radial direction of rotating shaft 31 is different from an inclination angle of second surface 115a with respect to the radial direction of rotating shaft 31. As illustrated in Fig. 5, when core block 110 is viewed from above, an intersection of first straight line L1 when first surface 114a extends and second straight line L2 when second surface 115a extends is positioned in protrusion 113a.

On the other hand, recess 113b that can be fitted to protrusion 113a, and third surface 114b and fourth surface 115b positioned on both sides of recess 113b are provided in second end 112b that is the other end in the circumferential direction of yoke portion 112. Recess 113b, third surface 114b, and fourth surface 115b are formed on end surfaces of second end 112b facing the circumferential direction. In top view, recess 113b is sandwiched between third surface 114b and fourth surface 115b.

Recess 113b is formed to be recessed from second end 112b in the circumferential direction of stator core 11. A shape of recess 113b in top view is semicircular. That is, a front surface of recess 113b in top view is an arc. Therefore, when core block 110 is viewed stereoscopically, recess 113b has a shape in which second end 112b is recessed in a semi-columnar shape. The shape of recess 113b is not limited thereto. The shape of recess 113b may be any shape as long as the recess can be fitted to protrusion 113a.

Third surface 114b is positioned on an outer peripheral side of recess 113b. Specifically, third surface 114b is a plane parallel to a plane passing through axis C of rotating shaft 31. Third surface 114b extends from a base on the outer peripheral side of recess 113b toward the outer peripheral side. Third surface 114b is a flat surface.

Third surface 114b is a surface of first end 112a of yoke portion 112 that can be brought into surface contact with first surface 114a. Therefore, first surface 114a of first end 112a of yoke portion 112 is a surface that can be brought into surface contact with third surface 114b.

fourth surface 115b is positioned on an inner peripheral side of recess 113b. Specifically, fourth surface 115b is a plane parallel to a plane passing through axis C of rotating shaft 31. Fourth surface 115b extends from a base on the inner peripheral side of recess 113b toward the inner peripheral side. Fourth surface 115b is a flat surface.

Fourth surface 115b is a surface that can be brought into surface contact with second surface 115a of first end 112a of yoke portion 112. Therefore, second surface 115a of first end 112a of yoke portion 112 is a surface that can be brought into surface contact with fourth surface 115b.

Both third surface 114b and fourth surface 115b are surfaces facing the circumferential direction of rotating shaft 31. In third surface 114b and fourth surface 115b, an inclination angle of third surface 114b with respect to the radial direction of rotating shaft 31 is different from an inclination angle of fourth surface 115b with respect to the radial direction of rotating shaft 31. As illustrated in Fig. 5, when core block 110 is viewed from above, an intersection of third straight line L3 when third surface 114b extends and fourth straight line L4 when fourth surface 115b extends is positioned in recess 113b.

A circumscribed surface of yoke portion 112 includes two curved surfaces (R surfaces) having different radii of curvature. Specifically, as illustrated in Fig. 5, in top view, a contour of yoke portion 112 in core block 110 includes a plurality of arcs having different radii of curvature.

A contour on one side in the circumferential direction of yoke portion 112 with tooth portion 111 as a reference includes first arc 116a and second arc 117a having different radii of curvature from each other. Radius of curvature R2 of second arc 117a is larger than radius of curvature R1 of first arc 116a (R2 > R1). In this case, second arc 117a is positioned on a distal end side of yoke portion 112 with respect to first arc 116a. A length of the arc of second arc 117a is shorter than a length of the arc of first arc 116a. First arc 116a and second arc 117a are continuous.

On the other hand, a contour on the other side in the circumferential direction of yoke portion 112 with tooth portion 111 as a reference includes third arc 116b and fourth arc 117b having different radii of curvature from each other. Radius of curvature R4 of fourth arc 117b is larger than radius of curvature R3 of third arc 116b (R4 > R3). In this case, fourth arc 117b is positioned on a distal end side of yoke portion 112 with respect to third arc 116b. A length of the arc of fourth arc 117b is shorter than a length of the arc of third arc 116b. Third arc 116b and fourth arc 117b are continuous.

Radius of curvature R3 of third arc 116b is the same as radius of curvature R1 of first arc 116a (R1 = R3). Radius of curvature R4 of fourth arc 117b is the same as radius of curvature R2 of second arc 117a (R2 = R4).

As illustrated in Fig. 4, a plurality of core blocks 110 having the above configuration are arrayed in the annular shape and are coupled. The plurality of core blocks 110 arrayed in an annular shape are coupled by coupling yoke portions 112 of two adjacent core blocks 110. The plurality of core blocks 110 all have the same shape. That is, stator core 11 includes only core block 110 having the shape illustrated in Fig. 5.

At this time, as illustrated in the enlarged view of Fig. 4, focusing on two coupled first core block 110a and second core block 110b among the plurality of core blocks 110, protrusion 113a, first surface 114a positioned on an outer peripheral side of protrusion 113a, and second surface 115a positioned on the inner peripheral side of protrusion 113a are provided in a coupling portion of yoke portion 112 of first core block 110a to yoke portion 112 of second core block 110b. That is, protrusion 113a, first surface 114a, and second surface 115a are provided in first end 112a of yoke portion 112 of first core block 110a on second core block 110b side.

Recess 113b, third surface 114b positioned on the outer peripheral side of recess 113b, and fourth surface 115b positioned on the inner peripheral side of recess 113b are provided in a coupling portion of yoke portion 112 of second core block 110b to yoke portion 112 of first core block 110a. That is, recess 113b, third surface 114b, and fourth surface 115b are provided in second end 112b of yoke portion 112 of second core block 110b on first core block 110a side.

In the coupling portion between first core block 110a and second core block 110b, protrusion 113a of yoke portion 112 of first core block 110a and recess 113b of yoke portion 112 of second core block 110b are fitted to each other.

In the entire circumference of stator core 11, first core block 110a and second core block 110b are alternately coupled. That is, stator core 11 includes the plurality of core blocks 110 including first core block 110a and second core block 110b.

In stator core 11 illustrated in Fig. 4, nine core blocks 110 are coupled. That is, the number of slots of stator 10 having stator core 11 illustrated in Fig. 4 is nine. In this case, as illustrated in Fig. 4, in first core block 110a and second core block 110b coupled to each other, first surface 114a of yoke portion 112 of first core block 110a and third surface 114b of yoke portion 112 of second core block 110b are brought into surface contact with each other. That is, in Fig. 4, first surface 114a is a contact surface coming into contact with third surface 114b. Third surface 114b is a contact surface coming into contact with first surface 114a. Therefore, in a case where core blocks 110 are coupled as illustrated in Fig. 4, first surface 114a and third surface 114b become mating surfaces of core blocks 110.

On the other hand, in Fig. 4, second surface 115a of yoke portion 112 of first core block 110a and fourth surface 115b of yoke portion 112 of second core block 110b do not come into contact with each other. That is, there is a gap between second surface 115a and fourth surface 115b. Second surface 115a and fourth surface 115b are separated from each other. Therefore, in a case where core blocks 110 are coupled as illustrated in Fig. 4, second surface 115a and fourth surface 115b become non-contact surfaces.

As described above, in a case where first surface 114a of first core block 110a and third surface 114b of second core block 110b are brought into surface contact with each other, the number of slots of stator 10 having stator core 11 is nine.

As illustrated in Fig. 4, in a case where first surface 114a of first core block 110a and third surface 114b of second core block 110b are brought into surface contact with each other, first arc 116a in the contour of yoke portion 112 of first core block 110a and third arc 116b in the contour of yoke portion 112 of second core block 110b are arcs of the same circle. In this case, a diameter of the circle constituted by first arc 116a and third arc 116b is less than or equal to 50 mm.

As illustrated in Fig. 4, in a case where first surface 114a of first core block 110a and third surface 114b of second core block 110b are brought into surface contact with each other (that is, in the case of the first coupling pattern), first surface 114a and third surface 114b as contact surfaces coincide with the radial direction of rotating shaft 31 in top view.

As described above, in two adjacent core blocks 110, protrusion 113a of first core block 110a and recess 113b of second core block 110b are fitted to each other, and first surface 114a o first core block 110a and third surface 114b of second core block 110b are brought into surface contact with each other. As a result, nine core blocks 110 can be coupled. That is, stator 10 having nine slots can be obtained by producing stator core 11 by coupling nine core blocks 110.

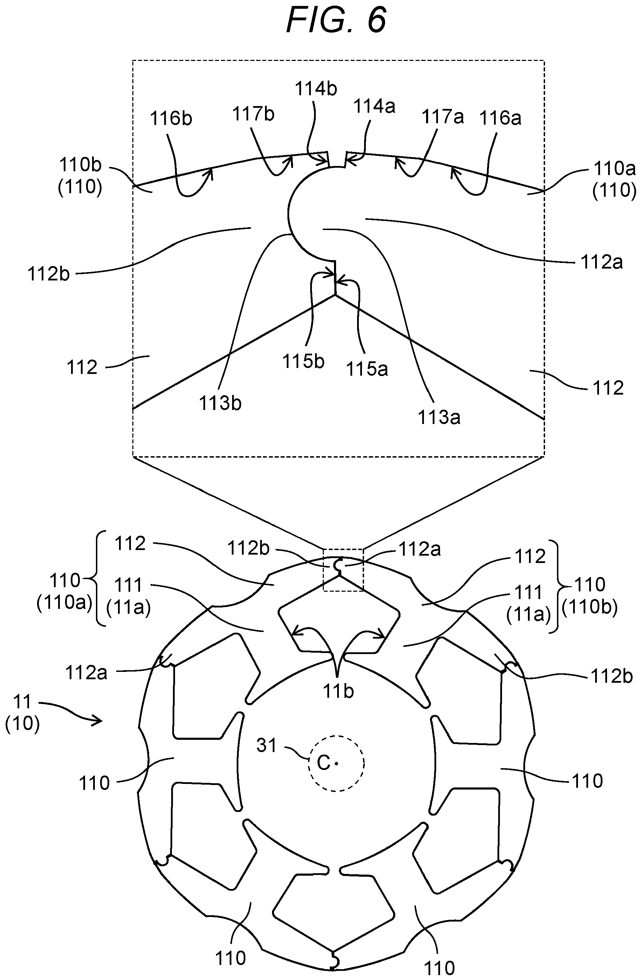

Fig. 6 is a plan view of stator core 11 according to the exemplary embodiment when the plurality of core blocks 110 are coupled in a second coupling pattern. In core block 110, as illustrated in Fig. 6, protrusion 113a of first core block 110a and recess 113b of second core block 110b are fitted to each other, and second surface 115a of first core block 110a and fourth surface 115b of second core block 110b are brought into surface contact with each other. As a result, six core blocks 110 can be coupled. That is, stator 10 having six slots can be obtained by producing stator core 11 by coupling six core blocks 110.

As illustrated in Fig. 6, in a case where the plurality of core blocks 110 are coupled in the second coupling pattern, in two adjacent first core block 110a and second core block 110b, second surface 115a of first core block 110a and fourth surface 115b of second core block 110b become contact surfaces. That is, in Fig. 6, second surface 115a is a contact surface coming into contact with fourth surface 115b. Fourth surface 115b is a contact surface coming into contact with second surface 115a. Therefore, in a case where core blocks 110 are coupled as illustrated in Fig. 6, second surface 115a and fourth surface 115b become mating surfaces of core blocks 110.

In the case of the second coupling pattern illustrated in Fig. 6, first surface 114a of yoke portion 112 of first core block 110a and third surface 114b of yoke portion 112 of second core block 110b do not come into contact with each other. That is, there is a gap between first surface 114a and third surface 114b. First surface 114a and third surface 114b are separated from each other. That is, in Fig. 6, first surface 114a and third surface 114b are non-contact surfaces.

As illustrated in Fig. 6, in a case where second surface 115a of first core block 110a and fourth surface 115b of second core block 110b are brought into surface contact with each other, second arc 117a in the contour of yoke portion 112 of first core block 110a and fourth arc 117b in the contour of yoke portion 112 of second core block 110b are arcs of the same circle. In this case, a diameter of the circle constituted by second arc 117a and fourth arc 117b is less than or equal to 50 mm. A diameter of stator core 11 in the case of the second coupling pattern illustrated in Fig. 6 is smaller than a diameter of stator core 11 in the case of the first coupling pattern illustrated in Fig. 4.

As illustrated in Fig. 6, in a case where second surface 115a of first core block 110a and fourth surface 115b of second core block 110b are brought into surface contact with each other (that is, in the case of the second coupling pattern), second surface 115a and fourth surface 115b as contact surfaces coincide with the radial direction of rotating shaft 31 in top view.

As described above, core block 110 according to the present exemplary embodiment includes tooth portion 111 and yoke portion 112. Protrusion 113a, first surface 114a positioned on the outer peripheral side of protrusion 113a, and second surface 115a positioned on the inner peripheral side of protrusion 113a are provided in first end 112a of yoke portion 112 in the circumferential direction. Recess 113b that can be fitted to protrusion 113a, third surface 114b positioned on the outer peripheral side of recess 113b, and fourth surface 115b positioned on the inner peripheral side of recess 113b are provided in second end 112b of yoke portion 112 in the circumferential direction.

In a case where stator core 11 is produced by coupling the plurality of core blocks 110 having such a shape, two adjacent first core block 110a and second core block 110b among the plurality of core blocks 110 are coupled by bringing first surface 114a and third surface 114b into surface contact with each other as illustrated in Fig. 4, or are coupled by bringing second surface 115a and fourth surface 115b into surface contact with each other as illustrated in Fig. 6. That is, as illustrated in Fig. 4, the plurality of core blocks 110 are coupled in the first coupling pattern in which first surface 114a and third surface 114b are brought into surface contact, or as illustrated in Fig. 6, the plurality of core blocks 110 are coupled in the second coupling pattern in which second surface 115a and fourth surface 115b are brought into surface contact with each other.

As a result, it is possible to realize stator 10 in which the number of slots is different between a case where first surface 114a and third surface 114b are brought into surface contact and a case where second surface 115a and fourth surface 115b are brought into surface contact. Specifically, as illustrated in Fig. 4, the number of slots when first surface 114a and third surface 114b are brought into surface contact with each other is nine. As illustrated in Fig. 6, the number of slots when second surface 115a and fourth surface 115b are brought into surface contact with each other is six. That is, the number of slots of two patterns can be realized by selecting the first coupling pattern illustrated in Fig. 4 and the second coupling pattern illustrated in Fig. 6 in accordance with the required number of slots and coupling core blocks 110.

As described above, core block 110 is used, and thus, stator 10 having slots of two patterns can be realized by one core block 110. That is, one core block 110 can be used by two methods.

In two adjacent first core block 110a and second core block 110b, the contour of yoke portion 112 in first core block 110a includes first arc 116a and second arc 117a having different radii of curvature. The contour of yoke portion 112 in second core block 110b includes third arc 116b and fourth arc 117b having different radii of curvature.

As a result, it is possible to prevent any of the coupling portion between first core block 110a and second core block 110b in a case where first surface 114a and third surface 114b are brought into surface contact with each other (in the case of the first coupling pattern in Fig. 4) and the coupling portion between first core block 110a and second core block 110b in a case where second surface 115a and fourth surface 115b are brought into surface contact with each other (in the case of the second coupling pattern in Fig. 6) from being angular.

For example, when the contour of yoke portion 112 of core block 110 includes only one arc, as illustrated in Fig. 6, when first core block 110a and second core block 110b are coupled such that second surface 115a on the inner peripheral side and fourth surface 115b are brought into surface contact, the coupling portion between first core block 110a and second core block 110b becomes angular, and a corner portion is formed on an outer surface of stator core 11. In this case, as illustrated in Fig. 2, the outer surface of stator core 11 abuts on an inner surface of first bracket 51 (frame). Thus, when the corner portion is formed on the outer surface of stator core 11, the corner portion comes into point contact with the inner surface of first bracket 51. Thus, stress from first bracket 51 is applied to stator core 11. As a result, stator core 11 may be damaged or the position of stator core 11 is deviated and a desired magnetic flux may not be generated.

On the other hand, as in the present exemplary embodiment, arcs having different radii of curvature are included in the contour of yoke portion 112 of core block 110, and thus, it is possible to prevent the coupling portion between first core block 110a and second core block 110b from being angular as described above. Specifically, as illustrated in Fig. 6, when first core block 110a and second core block 110b are coupled such that second surface 115a on the inner peripheral side and fourth surface 115b are brought into surface contact with each other, it is possible to prevent the coupling portion between first core block 110a and second core block 110b from being angular. As a result, a stress load applied to stator core 11 can be alleviated.

As described above, electric motor 1 according to the present exemplary embodiment includes stator 10 having stator core 11 in which the plurality of core blocks 110 are coupled in the annular shape, and rotor 30 having rotating shaft 31 and disposed inside stator 10. The plurality of core blocks 110 include first core block 110a and second core block 110b coupled to each other. Each of first core block 110a and second core block 110b includes yoke portion 112 extending along the circumferential direction with the axis of rotating shaft 31 as the center and tooth portion 111 extending from yoke portion 112 toward rotating shaft 31. Protrusion 113a, first surface 114a positioned on the outer peripheral side of protrusion 113a, and second surface 115a positioned on the inner peripheral side of protrusion 113a are provided in the coupling portion of yoke portion 112 of first core block 110a to yoke portion 112 of second core block 110b. Recess 113b fitted to protrusion 113a, third surface 114b positioned on the outer peripheral side of recess 113b, and fourth surface 115b positioned on the inner peripheral side of recess 113b are provided in the coupling portion of yoke portion 112 of second core block 110b to yoke portion 112 of first core block 110a. First core block 110a and second core block 110b are coupled by bringing first surface 114a and third surface 114b into surface contact with each other, or by bringing second surface 115a and fourth surface 115b into surface contact with each other.

As a result, the stator having slots of two patterns can be realized by one core block.

Core block 110 of the present exemplary embodiment is core block 110 that constitutes stator core 11, the plurality of the core blocks being coupled in an annular shape, and includes yoke portion 112 extending along the circumferential direction of stator core 11 and tooth portion 111 extending from yoke portion 112 toward the central portion of stator core 11. Protrusion 113a, first surface 114a positioned on the outer peripheral side of protrusion 113a, and second surface 115a positioned on the inner peripheral side of protrusion 113a are provided in one end of yoke 112 portion in the circumferential direction. Recess 113b that can be fitted to protrusion 113a, third surface 114b that is positioned on the outer peripheral side of recess 113b and is the surface capable of being brought into surface contact with first surface 114a, and fourth surface 115b that is positioned on the inner peripheral side of recess 113b and is the surface capable of being brought into surface contact with second surface 115a are provided in the other end of yoke portion 112 in the circumferential direction.

Electric motor 1 according to the present exemplary embodiment includes stator 10 having stator core 11 and the winding wound around stator core 11, and rotor 30 positioned to face stator 10.

### (Modification)

Although the present disclosure has been described above based on the exemplary embodiment, the present disclosure is not limited to the above exemplary embodiment.

For example, in the above exemplary embodiment, core block 110 has a shape in which the number of slots when first surface 114a and third surface 114b are brought into surface contact is nine and the number of slots when second surface 115a and fourth surface 115b are brought into surface contact is six. However, the present disclosure is not limited thereto. Specifically, core block 110 may have a shape in which the number of slots when first surface 114a and third surface 114b are brought into surface contact is 12 and the number of slots when second surface 115a and fourth surface 115b are brought into surface contact is nine.

In the above exemplary embodiment, rotor 30 is an IPM rotor. However, the present disclosure is not limited thereto. For example, a surface permanent magnetic (SPM) rotor in which a plurality of permanent magnets are provided on an outer surface of the rotor core may be used as rotor 30.

In the above exemplary embodiment, rotor 30 is the stacked body in which multiple steel plates are stacked. However, the present disclosure is not limited thereto. For example, rotor 30 may be made of a bulk material.

The present disclosure includes embodiments which those skilled in the art can obtain by adding various changes to the exemplary embodiment described above or embodiments implemented by freely combining constitutional elements and functions described in the exemplary embodiment without deviating from the spirit of the present disclosure.

### INDUSTRIAL APPLICABILITY

A technology of the present disclosure can be widely used for an electric motor, an electric device including the electric motor, and the like.

### REFERENCE MARKS IN THE DRAWINGS

- 1: electric motor
- 2: stator assembly
- 10: stator
- 11: stator core
- 11a: tooth
- 11b: slot
- 12: winding
- 20: circuit board
- 21: through-hole
- 30: rotor
- 31: rotating shaft
- 32: rotor core
- 32a: magnet insertion hole
- 33: permanent magnet
- 41: first bearing
- 42: second bearing
- 51: first bracket
- 52: second bracket
- 100: intermediate assembly
- 110: core block
- 110a: first core block
- 110b: second core block
- 111: tooth portion
- 111a: extending portion
- 111b: gap (slot opening)
- 112: yoke portion
- 112a: first end
- 112b: second end
- 113a: protrusion
- 113b: recess
- 114a: first surface
- 115a: second surface
- 114b: third surface
- 115b: fourth surface
- 116a: first arc
- 117a: second arc
- 116b: third arc
- 117b: fourth arc
- 120: connection terminal
- 130: insulator

## Claims

1. An electric motor comprising:
a stator including a stator core in which a plurality of core blocks are coupled in an annular shape; and
a rotor including a rotating shaft and disposed inside the stator,
wherein the plurality of core blocks include a first core block and a second core block coupled to each other,
each of the first core block and the second core block includes
a yoke portion extending along a circumferential direction with an axis of the rotating shaft as a center, and
a tooth portion extending from the yoke portion toward the rotating shaft,
a protrusion, a first surface positioned on an outer peripheral side of the protrusion, and a second surface positioned on an inner peripheral side of the protrusion are provided in a coupling portion of the yoke portion of the first core block to the yoke portion of the second core block,
a recess fitted to the protrusion, a third surface positioned on an outer peripheral side of the recess, and a fourth surface positioned on an inner peripheral side of the recess are provided in a coupling portion of the yoke portion of the second core block to the yoke portion of the first core block, and
the first core block and the second core block are coupled by bringing the first surface and the third surface into surface contact with each other, or by bringing the second surface and the fourth surface into surface contact with each other.

2. The electric motor according to Claim 1, wherein
the first core block and the second core block are alternately coupled to each other over an entire circumference of the stator core, and
a total number of slots of the stator is different between a case where the first surface and the third surface come into contact with each other and a case where the second surface and the fourth surface come into contact with each other.

3. The electric motor according to Claim 2, wherein
the total number of slots in a case where the first surface and the third surface are brought into surface contact with each other is nine, and
the total number of slots in a case where the second surface and the fourth surface are brought into surface contact with each other is six.

4. The electric motor according to Claim 2, wherein
the total number of slots in a case where the first surface and the third surface are brought into surface contact with each other is 12, and
the total number of slots in a case where the second surface and the fourth surface are brought into surface contact with each other is nine.

5. The electric motor according to any one of Claims 1 to 4, wherein
in top view, a contour of the yoke portion in the first core block includes a first arc and a second arc having different radii of curvature, and
in top view, a contour of the yoke portion in the second core block includes a third arc and a fourth arc having different radii of curvature.

6. The electric motor according to Claim 5, wherein
in the yoke portion of the first core block, the second arc is positioned on a distal end side of the yoke portion with respect to the first arc,
in the yoke portion of the second core block, the fourth arc is positioned on a distal end side of the yoke portion with respect to the third arc, and
when the first surface and the third surface are brought into surface contact with each other, the first arc and the third arc become arcs of a same circle.

7. The electric motor according to claim 5, wherein
in the yoke portion of the first core block, the second arc is positioned on a distal end side of the yoke portion with respect to the first arc,
in the yoke portion of the second core block, the fourth arc is positioned on a distal end side of the yoke portion with respect to the third arc, and
when the second surface and the fourth surface are brought into surface contact with each other, the second arc and the fourth arc become arcs of a same circle.

8. The electric motor according to claim 5, wherein
in the yoke portion of the first core block, the second arc is positioned on a distal end side of the yoke portion with respect to the first arc,
in the yoke portion of the second core block, the fourth arc is positioned on a distal end side of the yoke portion with respect to the third arc, and
when the first surface and the third surface are brought into surface contact with each other, the first arc and the third arc become arcs of a same circle, or when the second surface and the fourth surface are brought into surface contact with each other, the second arc and the fourth arc become arcs of a same circle.

9. The electric motor according to any one of Claims 6 to 8, wherein a diameter of the circle is less than or equal to 50 mm.

10. The electric motor according to any one of Claims 1 to 4, wherein, in top view, an intersection of a first straight line when the first surface extends and a second straight line when the second surface extends is positioned within the protrusion.

11. The electric motor according to any one of Claims 1 to 4, wherein the electric motor is a brushless motor.

12. A core block included in a stator core, the stator core including a plurality of stator blocks being coupled in an annular shape, the plurality of stator cores each being the core block, the core block comprising:
a yoke portion extending along a circumferential direction of the stator core; and
a tooth portion extending from the yoke portion toward a central portion of the stator core,
a protrusion, a first surface positioned on an outer peripheral side of the protrusion, and a second surface positioned on an inner peripheral side of the protrusion are provided at one end of the yoke portion in a circumferential direction, and
a recess configured to be fitted to the protrusion, a third surface positioned on an outer peripheral side of the recess, the third surface being a surface configured to be brought into surface contact with the first surface, and a fourth surface positioned on an inner peripheral side of the recess, the fourth surface being a surface configured to be brought into surface contact with the second surface are provided at an other end of the yoke portion in the circumferential direction.

13. A stator core comprising a plurality of core blocks each being the core block according to Claim 12, wherein the plurality of core blocks are coupled in an annular shape.

14. An electric motor comprising:
a stator including the stator core according to Claim 13 and a winding wound around the stator core; and
a rotor positioned to face the stator.
